(19)

Europäisches Patentamt

European Patent Office

Office européen des brevets

(11) **EP 2 919 416 B1**

(12) **EUROPEAN PATENT SPECIFICATION**

(45) Date of publication and mention
of the grant of the patent:
**10.05.2017 Bulletin 2017/19**

(21) Application number: **13853817.8**

(22) Date of filing: **17.09.2013**

(51) Int Cl.:
**H04L 12/24** *(2006.01)*    **H04L 12/26** *(2006.01)*

(86) International application number:
**PCT/CN2013/083698**

(87) International publication number:
**WO 2014/071776 (15.05.2014 Gazette 2014/20)**

(54) **METHOD AND SYSTEM FOR EVALUATING QUALITY OF EXPERIENCE OF COMMUNICATION SERVICE USERS**

VERFAHREN UND SYSTEM ZUR BEWERTUNG DER ERLEBNISQUALITÄT VON KOMMUNIKATIONSDIENSTBENUTZERN

PROCÉDÉ ET SYSTÈME POUR ÉVALUER LA QUALITÉ D'EXPÉRIENCE D'UTILISATEURS DE SERVICES DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.11.2012 CN 201210438365**

(43) Date of publication of application:
**16.09.2015 Bulletin 2015/38**

(73) Proprietor: **ZTE Corporation**
**Shenzhen, Guangdong 518057 (CN)**

(72) Inventor: **LUO, Ronghui**
**Shenzhen**
**Guangdong 518057 (CN)**

(74) Representative: **Lavoix**
**Bayerstrasse 83**
**80335 München (DE)**

(56) References cited:
**WO-A1-2012/051852**    **WO-A1-2012/105941**
**CN-A- 102 104 900**    **CN-A- 102 104 901**
**CN-A- 102 457 399**

- **"User Service Performance", ERICSSON White Paper, 1 February 2007 (2007-02-01), pages 1-17, XP055005217, Retrieved from the Internet: URL:http://skbs.files.wordpress.com/2007/0 9/user_service_performance.pdf [retrieved on 2011-08-18]**
- **"Measurement Ontology for IP Traffic (MOI); Requirements for IP Traffic Measurement Ontologies Development;Draft ETSI GS MOI 0.0.2", ETSI DRAFT; DRAFT ETSI GS MOI 0.0.2, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. zArchive - ISG, no. V0.0.4, 14 May 2012 (2012-05-14), pages 1-30, XP014194317, [retrieved on 2012-05-14]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The disclosure relates to the technology field of communications, and particularly to a method and system for evaluating Quality of Experience (QoE) of communication service users.

**BACKGROUND**

Along with the development of a communication technology, a mobile communication network may provide a more and more rich mobile communication service and application for a user, when evaluating user QoE of a mobile communication service, a Key Quantity Indicator (KQI)/a Key Performance Indicator (KPI)-QoE quantitative relation model or curve is fitted or constructed usually by adopting a constant module equation, and then a statistical KQI value or KPI value is substituted into this quantitative module, and calculated QoE is taken as an evaluation result of the user QoE. Because differences of an economic situation, a cultural environment, and a population size, the KQI/KPI-QoE quantitative relation models corresponding to different areas and different populations usually vary considerably, the method which performs fitting by using the constant module equation to construct the KQI/KPI-QoE quantitative relation model will lead to a big error of evaluating the user QoE.

Simultaneously, the currently applied method which obtains the user QoE purely through a user survey, cannot implement real-time monitoring of the user QoE, and a time delay is long and a cost is high.

In conclusion, an effective solution to deal with the problems -- evaluation result of user's QoE has great deviation and user's QoE cannot be monitored in real-time -- still does not exist in the related art.

The reference dodument WO2012/051852A1 discloses a method and system for quality of service monitoring based on a grouping indicator architecture. The method includes: an indicator architecture model and a grouping model for quality of service monitoring are established on a quality of service monitoring server; by collecting Key Performance Indicators (KPIs) reported by the monitored user terminal, based on the established indicator architecture model and grouping model, the quality of service monitoring server performs the quality of service monitoring for the user terminal. The present invention inplements the comprehensive monitoring for the whole network service level, and improves the maintenance service level.

In the reference document "User Service Performance", understanding the complexity of user service performance requires detailed knowledge of system service performance. Examples of system services are MMS, streaming and TV services. System services are user-independent and are the building blocks for numerous user services-such as news, music and games-in order to secure the best performance. Achieving excellent service performance requires a top-down approach, where the selection, evaluation and approval of adequate perforamce indicators are carried out 'system end-to-end' and before service launch. Defining and agreeing such a baseline gives a new firm level against which performance can be monitored. With a measurable system service level, the Quality of System Service (QoSS) can be set-offering a cost-efficient simplification and a pragmatic level that also paves the way for a Quality of User Service (QoUS) level.

In the reference document "Measurement Ontology for IP Traffic (MOI); Requirements for IP Traffic Measurement Ontologies Development", defining a complete set of concepts and their relationship to support coherent developments of traffic measurement systems needs not only an extensive mapping of key performance indicators (KPI), key quality indicators (KQI) and currently used parameters to describe IP networks, but a serious pre-definition of the framework and extension of the ontology to be set up. If it is true that ontologies should be complete and internally coherent, one ought to be aware of the final purpose of establishing such an ontology, namely supporting information systems to achieve IP traffic monitoring and quality of service (QoS) applications that can exchange information and back service level agreements (SLA) up and fulfil the expextations of customers by assuring the quality of experience (QoE). This document starts setting up the limits to the ontology that needs to be defined for such purpose. Then, after reviewing the parameters that define IP networks, some use cases are used to analyse which internal specifications must be respected in order to give rise to a coherent ontology for IP traffic monitoring useful for practical purposes.

**SUMMARY**

In view of this, a main purpose of an embodiment of the disclosure is to provide a method and a system for evaluating QoE of communication service users, to solve the problem that an error of evaluating user QoE by using a KQI/KPI-QoE quantitative relation model in the related art is big, and the user QoE cannot be monitored in real-time purely by obtaining the user QoE through a user survey.

In order to achieve the above purpose, a technical scheme of the embodiment of the disclosure is implemented like this:

An embodiment of the disclosure discloses a method for evaluating QoE of communication service users, which includes:

extracting user application preference information from user behaviour basic data, creating a Customer Experience Indicator (CEI) group of a service to be evaluated according to the user application preference information, wherein the CEI group includes: a Subordinate Quality of Experience (Sub-QoE) indicator and an Integrated Quality of Experience (In-QoE) indicator;

receiving an actual Sub-QoE indicator value, an actual In-QoE indicator value and an actual Key Quantity Indicator (KQI) value of the service to be evaluated in an area to be evaluated aiming at a single user, and constructing a quantitative relation model between a KQI and a CEI by using the Sub-QoE indicator value, the In-QoE indicator value and the KQI value; and

substituting the statistical KQI value in the area to be evaluated aiming at the service to be evaluated into the quantitative relation model between the KQI and the CEI, and taking a calculated Sub-QoE value and a calculated In-QoE value as a QoE evaluation result.

Preferably, the constructing the quantitative relation model between the KQI and the CEI by using the actual Sub-QoE indicator value, the actual In-QoE indicator value and the actual KQI value of the service to be evaluated in the area to be evaluated aiming at the single user may include:

constructing a quantitative relation model between the KQI and the Sub-QoE indicator, and a quantitative relation model between the Sub-QoE indicator and the In-QoE indicator by using the actual Sub-QoE indicator value, the actual In-QoE indicator value and the actual KQI value of the service to be evaluated in the area to be evaluated aiming at the single user.

Preferably, the user application preference information may include: a specific application of the service to be evaluated, and a quality characteristic of the specific application of the service to be evaluated preferred by a user.

Preferably, the method may further include: before constructing the quantitative relation model between the KQI and the Sub-QoE indicator,

mapping the quality characteristic separately to accessibility, retainability and integrity of the service to be evaluated according to the quality characteristic of the specific application of the service to be evaluated preferred by the user, and creating an accessibility Sub-QoE indicator, a retainability Sub-QoE indicator and an integrity Sub-QoE indicator reflecting the quality characteristic.

Preferably, the method may further include: before constructing the quantitative relation model between the KQI and the Sub-QoE indicator,

associating the created accessibility Sub-QoE indicator, the created retainability Sub-QoE indicator and the created integrity Sub-QoE indicator correspondingly with an accessibility KQI, a retainability KQI and an integrity KQI of the service to be evaluated, to construct the quantitative relation model between the KQI and the Sub-QoE indicator according to an association relation between the Sub-QoE indicator and the KQI.

Preferably, the method may further include: before constructing the quantitative relation model between the Sub-QoE indicator and the In-QoE indicator,

associating the accessibility Sub-QoE indicator, the retainability Sub-QoE indicator and the integrity Sub-QoE indicator created according to the quality characteristic of the specific application of the service to be evaluated preferred by the user with the In-QoE indicator of the service to be evaluated, to construct the quantitative relation model between the Sub-QoE indicator and the In-QoE indicator according to an association relation between the Sub-QoE indicator and the In-QoE indicator.

An embodiment of the disclosure further discloses a system for evaluating QoE of communication service users, which includes: a basic data extracting and storing module, a CEI group creating module, a quantitative relation model constructing module, and a user QoE evaluating module; wherein

the basic data extracting and storing module is configured to extract and store user application preference information from user behaviour basic data; to receive and store an actual Subordinate Quality of Experience (Sub-QoE) indicator value and an actual Integrated Quality of Experience (In-QoE) indicator value and an actual Key Quantity Indicator (KQI) value of a service to be evaluated in an area to be evaluated aiming at a single user; to receive and store a statistical KQI value in the area to be evaluated aiming at the service to be evaluated;

the CEI group creating module is configured to create a CEI group of the service to be evaluated according to the user application preference information received and stored by the basic data extracting and storing module, wherein the CEI group includes: a Sub-QoE indicator, and an In-QoE indicator;

the quantitative relation model constructing module is configured to constructing a quantitative relation model between a KQI and a CEI by using the actual Sub-QoE indicator value, the actual In-QoE indicator value and the actual KQI value of the service to be evaluated in the area to be evaluated aiming at the single user; and

the user QoE evaluating module is configured to substitute the statistical KQI value in the area to be evaluated aiming at the service to be evaluated, which is received and stored by the basic data extracting and storing module, into the quantitative relation model between the KQI and the CEI created by the quantitative relation model creating module, and to take a calculated Sub-QoE value and a calculated In-QoE value as a QoE evaluation result.

Preferably, the quantitative relation model constructing module may be further configured to construct a quantitative relation model between the KQI and the Sub-QoE indicator and a quantitative relation model between the Sub-QoE indicator and the In-QoE indicator by using the actual Sub-QoE indicator value, the actual In-QoE indicator value and the actual KQI value of the service to be evaluated in the area to be evaluated aiming at the single user, which is received and stored by the basic data extracting and storing module.

Preferably, the user application preference information may include: a specific application of the service to be evaluated, and a quality characteristic of the application of the service to be evaluated preferred by a user.

Preferably, the CEI group creating module may be further configured to map the quality characteristic separately to accessibility, retainability and integrity of the service to be evaluated, according to the quality characteristic of the specific application of the service to be evaluated preferred by the user, which is extracted and stored by the basic data extracting and storing module, and to create an accessibility Sub-QoE indicator, a retainability Sub-QoE indicator and an integrity Sub-QoE indicator reflecting the quality characteristic.

Preferably, the system may further include:

an associating module, configured to associate the accessibility Sub-QoE indicator, the retainability Sub-QoE indicator and the integrity Sub-QoE indicator, which are created by the CEI group creating module, correspondingly with an accessibility KQI, a retainability KQI and an integrity KQI; and

the quantitative relation model constructing module may further be configured to construct the quantitative relation model between the KQI and the Sub-QoE indicator according to an association relation between the KQI and the Sub-QoE indicator established by the associating module.

Preferably, the associating module may further be configured to associate the accessibility Sub-QoE indicator, the retainability Sub-QoE indicator and the integrity Sub-QoE indicator created by the CEI group creating module aiming at the service to be evaluated with the In-QoE indicator of the service to be evaluated; and

the quantitative relation model constructing module may further be configured to construct the quantitative relation model between the Sub-QoE indicator and the In-QoE indicator according to an association relation between the Sub-QoE indicator and the In-QoE indicator which is established by the associating module.

In the embodiment of the disclosure, the quantitative relation model between the KQI and the CEI is constructed by using the actual Sub-QoE indicator value, the actual In-QoE indicator value and the actual KQI value of the service to be evaluated in the area to be evaluated aiming at the single user; the statistical KQI value in the area to be evaluated aiming at the service to be evaluated is substituted into the quantitative relation model between the KQI and the CEI, and the calculated Sub-QoE value and the calculated In-QoE value are taken as a QoE evaluation value, and the Sub-QoE indicator is created according to a user preference of the service to be evaluated in the area to be evaluated. In this way, the quantitative relation model between the KQI and the CEI constructed according to the actual Sub-QoE indicator value, the actual In-QoE indicator value and the actual KQI value, can accurately reflect user QoE of the service to be evaluated in the area to be evaluated, and can avoid the problem that the KQI/KPI-QoE quantitative relation model fitted by adopting a constant module equation cannot adapt a difference of a cultural factor, an economic factor and other factors in different areas between different populations, leading to a big error of evaluating the user QoE, and can monitor the user QoE in real time and improve a real-time performance of the user QoE, and an implementation cost is low.

**BRIEF DESCRIPTION OF THE DRAWINGS**

Fig. 1 is a schematic implementation flowchart of a method for evaluating QoE of communication service users of an embodiment of the disclosure;

Fig. 2 is a schematic implementation flowchart of constructing a KQI-CEI quantitative relation model by adopting a genetic algorithm of an embodiment of the disclosure;

Fig. 3 is a schematic structure diagram of a system for evaluating QoE of communication service users of an embodiment of the disclosure;

Fig. 4 is a first schematic implementation flowchart of evaluating QoE of communication service users of an embodiment of the disclosure; and

Fig. 5 is a second schematic implementation flowchart of evaluating QoE of communication service users of an embodiment of the disclosure.

## DETAILED DESCRIPTION

The disclosure is also explained further in detail in combination with the drawings and specific embodiments below.

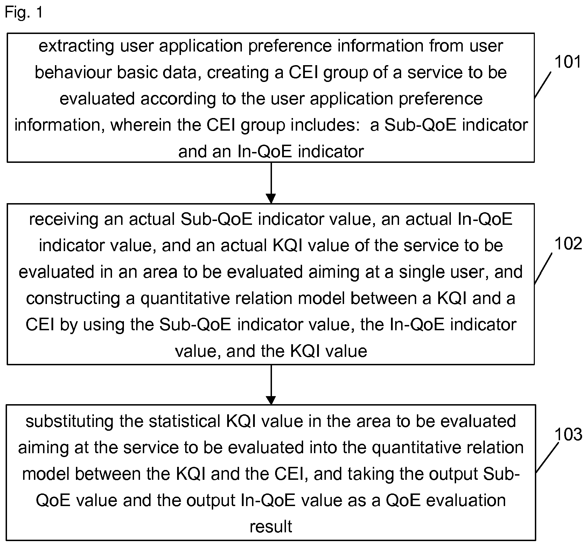

An embodiment of the disclosure records a method for evaluating QoE of communication service users, and Fig. 1 is a schematic implementation flowchart of a method for evaluating QoE of communication service users of an embodiment of the disclosure, as shown in Fig. 1 the method includes the following steps:

Step 101: extracting user application preference information from user behaviour basic data, creating a CEI group of a service to be evaluated according to the user application preference information, wherein the CEI group includes: a Sub-QoE indicator and an In-QoE indicator.

Wherein the user implementation preference information includes a specific application of the service to be evaluated, and a quality characteristic of the specific application of the service to be evaluated preferred by a user.

As a preferred embodiment, the quality characteristic is further mapped separately to accessibility, retainability, and integrity of the service to be evaluated according to the quality characteristic of the specific application of the service to be evaluated preferred by the user, and an accessibility Sub-QoE indicator, a retainability Sub-QoE indicator, and an integrity Sub-QoE indicator reflecting the quality characteristic are created.

Wherein the Sub-QoE indicator is different aspects of QoE indicators of the user aiming at the specific application of the service to be evaluated; and the In-QoE indicator is an Integrated QoE of the user aiming at the specific application of the service to be evaluated.

It needs to be explained that, an operation of extracting the user application preference information from the user behaviour basic data, and the operation of creating the CEI group of the service to be evaluated according to the user application preference information are correspondingly completed by a basic data extracting and storing module and a CEI group creating module of a user QoE evaluating system, the basic data extracting and storing module and the CEI group creating module may be located in the same device, or may be distributed in different devices.

Step 102: receiving an actual Sub-QoE indicator value, an actual In-QoE indicator value, and an actual KQI value of the service to be evaluated in an area to be evaluated aiming at a single user, and constructing a quantitative relation model between a KQI and a CEI by using the Sub-QoE indicator value, the In-QoE indicator value and the KQI value.

The Sub-QoE indicator value and the In-QoE indicator value are obtained through a user survey, and the KQI value is read from a KQI statistic system.

As a preferred embodiment, the constructing the quantitative relation model between the KQI and the CEI by using the Sub-QoE indicator value, the In-QoE indicator value and the KQI value includes: constructing the quantitative relation model between the KQI and the Sub-QoE indicator and the quantitative relation model between the Sub-QoE indicator and the In-QoE indicator by using the actual Sub-QoE indicator value, the actual In-QoE indicator value, and the actual KQI value of the service to be evaluated in the area to be evaluated aiming at the single user.

Wherein the operation of receiving the actual Sub-QoE indicator value, the actual In-QoE indicator value, and the actual KQI value in the area to be evaluated aiming at the single user, and the operation of constructing the quantitative relation model between the KQI and the CEI by using the Sub-QoE indicator value, the In-QoE indicator value and the KQI value are correspondingly completed by the basic data extracting and storing module and a quantitative relation model constructing module in the user QoE evaluating system. The quantitative relation model constructing module, and the basic data extracting and storing module and the CEI group creating module in the user QoE evaluating system described in step 101 may be located in the same device, or may also be distributed in different devices.

As a preferred embodiment, the method further includes: before constructing the quantitative relation model between the KQI and the Sub-QoE indicator,
associating the created accessibility Sub-QoE indicator, the created retainability Sub-QoE indicator and the created integrity Sub-QoE indicator correspondingly with an accessibility KQI, a retainability KQI, and an integrity KQI of the service to be evaluated, to construct the quantitative relation model between the KQI and the Sub-QoE indicator according to an association relation between the Sub-QoE indicator and the KQI.

As a preferred embodiment, the method further includes: before constructing the quantitative relation model between the Sub-QoE indicator and the In-QoE indicator,
associating the accessibility Sub-QoE indicator, the retainability Sub-QoE indicator, and the integrity Sub-QoE indicator created according to the quality characteristic of the specific application of the service to be evaluated preferred by the user with the In-QoE indicator of the service to be evaluated, to construct the quantitative relation model between the Sub-QoE indicator and the In-QoE indicator according to the association relation between the Sub-QoE indicator and the In-QoE indicator.

It needs to be explained that, the operation of associating the created accessibility Sub-QoE indicator, the created retainability Sub-QoE indicator, and the created integrity Sub-QoE indicator correspondingly with the accessibility KQI, the retainability KQI, and the integrity KQI of the service to be evaluated, and the operation of associating the created accessibility Sub-QoE indicator, the created retainability Sub-QoE indicator, and the created integrity Sub-QoE indicator correspondingly with the In-QoE indicator of the service to be evaluated are completed by an associating module in the user QoE evaluating system. The associating module, and the basic data extracting and storing module, the CEI group creating module and the quantitative relation model constructing module in the user QoE evaluating system may be located in the same device, or may also be distributed in different devices.

Wherein, there may be one or more KQIs associated with one said Sub-QoE. For example, when one KQI is associated with one said Sub-QoE, a one-to-one quantitative relation model between the KQI and the Sub-QoE indicator is constructed correspondingly in the above process; when multiple KQIs are associated with one said Sub-QoE, a many-to-one quantitative relation model between the KQI and the Sub-QoE indicator is constructed correspondingly in the above process.

Wherein, the quantitative relation model between the KQI and the Sub-QoE indicator, and the quantitative relation model between the Sub-QoE indicator and the In-QoE indicator may be self-adaptively constructed by adopting a genetic algorithm.

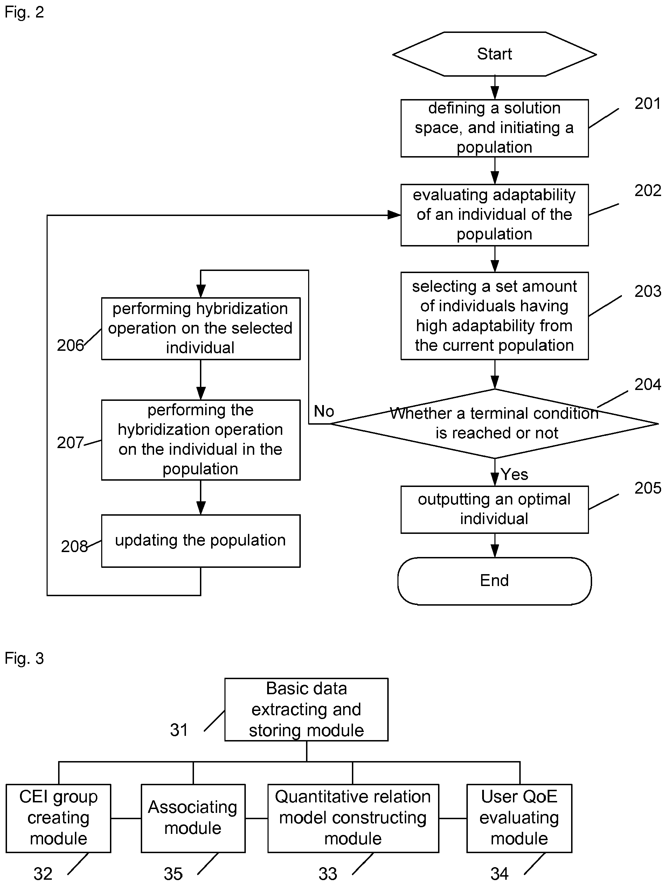

Constructing a KQI-CEI quantitative relation model is further explained in detail below. Fig. 2 is a schematic implementation flowchart of constructing the KQI-CEI quantitative relation model by adopting the genetic algorithm of an embodiment of the disclosure, as shown in Fig. 2, including the following steps:

Step 201: defining a solution space, and initiating a population.

The solution space includes all possible function modules constructing the quantitative relation model between the KQI and the Sub-QoE indicator and the quantitative relation model between the Sub-QoE indicator and the In-QoE indicator.

The solution space further includes the quantitative relation model between the KQI and the Sub-QoE indicator, and an operator set, a variable symbol set and a data set possibly relating to the quantitative relation model between the In-QoE and the Sub-QoE indicator. Wherein, the operator set contains various kinds of function operators relating to the quantitative relation model, which include but are not limited to addition, subtraction, multiplication, division, exponent, logarithm, and etc.; the variable symbol set contains a variable possibly relating to the quantitative relation model, which includes the Sub-QoE indicator, the In-QoE indicator, and the KQI; the data set is value ranges of various kinds of constants relating to the quantitative relation model, which include but are not limited to a constant item, an exponent item, a coefficient item, and etc., wherein, a maximum value range of various kinds of constants is set according to a data type specifically corresponding to the data set, for example, when the data set is a correlation value corresponding to a KQI 'a webpage header element opening success rate', then a value range of this data set may be 0-100%.

Wherein, population initiation processing is performed according to a defined solution space, this processing will generate a population composed of a certain amount of individuals; the amount of the populations generally is between dozens and hundreds, and may be selected according to an actual situation.

Wherein, the individual is one quantitative relation model function between the KQI and the Sub-QoE indicator, or one quantitative relation model function between the Sub-QoE indicator and the In-QoE indicator.

Step 202: evaluating adaptability of an individual of the population.

Namely the individuals of the population are sorted in accordance with a level of the adaptability, and the adaptability is a representation of a model curve fitting effect of the individual.

Step 203: selecting a set amount of individuals having the highest adaptability from the current population.

Step 204: judging whether the current processing reaches a terminal condition or not, if the terminal condition is reached, then executing step 205, namely outputting the individual which is selected in step 203 and has the highest adaptability as a model curve fitting result, and taking the quantitative relation model corresponding to this model curve as the constructed quantitative relation model; otherwise, turning to step 206.

The terminal condition includes one or more of the following conditions:

(1) a maximum number of reproductions is reached;
wherein, the maximum number of the reproductions is positively correlated with a model fitting accuracy and processing time;
(2) a maximum time length appointed by the processing time is reached;
wherein, the processing time is positively correlated with the model fitting accuracy;
(3) a fitting error of an optimal individual model curve in the population is smaller than or equal to an appointed value, or the adaptability is greater than or equal to an appointed value;

Step 206: performing a hybridization operation on the selected individual;

wherein, random pairwise coupling is performed on parent individuals to form a hybridization coupling pool; each pair of parent individuals are hybridized in a set probability condition;

Step 207: performing the hybridization operation on each individual in the population in the set probability condition; and

Step 208: updating the population, and then recursively calling step 202.

Namely an individual having low adaptability in a parent population is substituted with a child individual that completes hybridization and variation.

Step 103: substituting the statistical KQI value in the area to be evaluated aiming at the service to be evaluated into the quantitative relation model between the KQI and the CEI, and taking the output Sub-QoE value and the output In-QoE value as a QoE evaluation result.

Wherein, a statistic of the KQI value in the area to be evaluated aiming at the service to be evaluated is obtained, and a statistical dimension is determined according to an actual requirement, and the statistical dimension includes but is not limited to:

a user dimension, a self-defined user group dimension, a cell dimension, a self-defined cell combinational dimension, a Radio Network Controller (RNC) dimension, a Service Provider (SP) dimension, and a full-network dimension.

Wherein, the operations of substituting the statistical KQI value in the area to be evaluated aiming at the service to be evaluated into the quantitative relation model between the KQI and the CEI, and taking the output Sub-QoE value and the output In-QoE value as the QoE evaluation result having the same statistical dimension as that of the KQI, are completed by the user QoE evaluating module in the user QoE evaluating system. The user QoE evaluating module, the associating module, the basic data extracting and storing module, the CEI group creating module and the quantitative relation model constructing module in step 102 may be located in the same device, or may be distributed in different devices.

An embodiment of the disclosure records a system for evaluating QoE of communication service users, and Fig. 3 is a schematic structure diagram of the system for evaluating QoE of communication service users of an embodiment of the disclosure. As shown in Fig. 3, the system includes: a basic data extracting and storing module 31, a CEI group creating module 32, a quantitative relation model constructing module 33, and a user QoE evaluating module 34; wherein the basic data extracting and storing module 31 is configured to extract and store user application preference information from user behaviour basic data; to receive and store an actual Sub-QoE indicator value, an actual In-QoE indicator value and an actual KQI value of a service to be evaluated in an area to be evaluated aiming at a single user; to receive and store a statistical KQI value in the area to be evaluated aiming at the service to be evaluated;

the CEI group creating module 32 is configured to create a CEI group of the service to be evaluated according to the user application preference information received and stored by the basic data extracting and storing module 31, wherein the CEI group includes: a Sub-QoE indicator, and an In-QoE indicator;

the quantitative relation model constructing module 33 is configured to construct a quantitative relation model between the KQI and the CEI by using the actual Sub-QoE indicator value, the In-QoE indicator value and the KQI value of the service to be evaluated in the area to be evaluated aiming at the single user; and

the user QoE evaluating module 34 is configured to substitute the statistical KQI value in the area to be evaluated aiming at the service to be evaluated, which is received and stored by the basic data extracting and storing module 31, into the quantitative relation model between the KQI and the CEI created by the quantitative relation model creating module, and to take the calculated Sub-QoE value and the calculated In-QoE value as a QoE evaluation result.

Wherein, the quantitative relation model constructing module 33 is further configured to construct the quantitative relation model between the KQI and the Sub-QoE indicator and the quantitative relation model between the Sub-QoE indicator and the In-QoE indicator by using the actual Sub-QoE indicator value, the actual In-QoE indicator value, and the actual KQI value of the service to be evaluated in the area to be evaluated aiming at the single user, which is received and stored by the basic data extracting and storing module 31.

Wherein, the quantitative relation model constructing module 33 may adopt a genetic algorithm, and self-adaptively construct the quantitative relation model between the KQI and the Sub-QoE indicator, and the quantitative relation model between the Sub-QoE indicator and the In-QoE indicator.

Wherein, the user application preference information includes a specific application of the service to be evaluated, and a quality characteristic of the specific application of the service to be evaluated preferred by a user.

Wherein, the CEI group creating module 32 is further configured to map the quality characteristic separately to accessibility, retainability, and integrity of the service to be evaluated, according to the quality characteristic of the specific application of the service to be evaluated preferred by the user, which is extracted and stored by the basic data extracting and storing module 31, and to create an accessibility Sub-QoE indicator, a retainability Sub-QoE indicator and an integrity Sub-QoE indicator reflecting the quality characteristic.

Wherein, the system further includes:

an associating module 35, configured to associate the accessibility Sub-QoE indicator, the retainability Sub-QoE indicator and the integrity Sub-QoE indicator, which are created by the CEI group creating module 32 aiming at the service to be evaluated, correspondingly with an accessibility KQI, a retainability KQI and an integrity KQI; and the quantitative relation model constructing module 33 is further configured to construct the quantitative relation model between the KQI and the Sub-QoE indicator according to an association relation between the KQI and the Sub-QoE indicator established by the associating module 35.

For example, when there is only one KQI associated with one said Sub-QoE, the quantitative relation model constructing module 33 correspondingly constructs a one-to-one quantitative relation model between the KQI and the Sub-QoE indicator; when there are multiple KQIs associating with one said Sub-QoE, the quantitative relation model constructing module 33 correspondingly constructs a many-to-one quantitative relation model between the KQI and the Sub-QoE indicator.

Wherein, the associating module 35 is further configured to associate the accessibility Sub-QoE indicator, the retainability Sub-QoE indicator and the integrity Sub-QoE indicator created by the CEI group creating module 32 aiming at the service to be evaluated with the In-QoE indicator of the service to be evaluated; and
the quantitative relation model constructing module 33 is further configured to construct the quantitative relation model between the Sub-QoE indicator and the In-QoE indicator according to the association relation between the Sub-QoE indicator and the In-QoE indicator which is established by the associating module 35.

Wherein, the quantitative relation model constructing module 33 may adopt the genetic algorithm, and self-adaptively construct the quantitative relation model between the KQI and the Sub-QoE indicator and the quantitative relation model between the Sub-QoE indicator and the In-QoE indicator.

It needs to be explained that, the basic data extracting and storing module 31, the CEI group creating module 32, the quantitative relation model constructing module 33, the user QoE evaluating module 34 and the associating module 35 in a user QoE evaluating system may be located in the same device or may be distributed in different devices.

In an actual application, the basic data extracting and storing module 31, the CEI group creating module 32, the quantitative relation model constructing module 33, the user QoE evaluating module 34 and the associating module 35 may all be implemented by a Central Processing Unit (CPU), a Digital Signal Processor (DSP), or a Field Programmable Gate Array (FPGA) in the device in which the user QoE evaluating system is located or distributed.

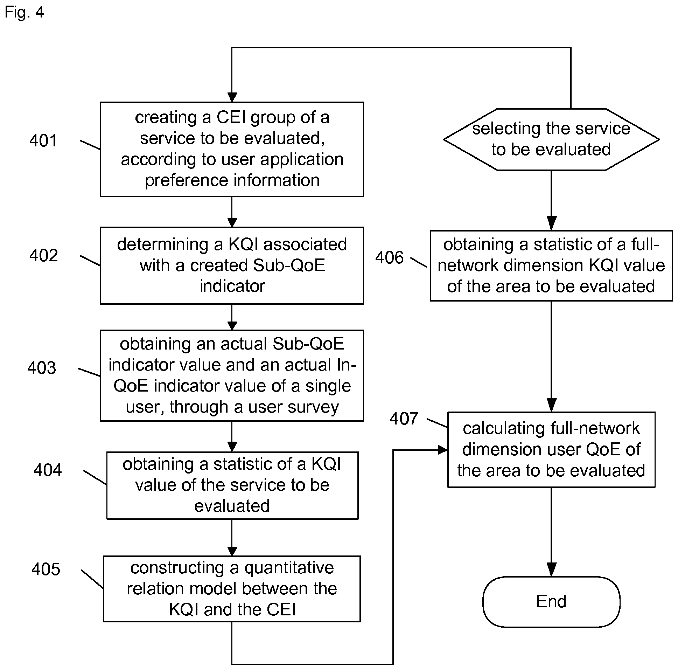

Evaluating the QoE of communication service users is also taken as an example below to further explain the method for evaluating QoE of communication service users recorded by an embodiment of the disclosure in detail. Fig. 4 is a first schematic implementation flowchart of one embodiment of evaluating QoE of communication service users of an embodiment of the disclosure, as shown in Fig. 4, including:

Step 401: creating a CEI group of a service to be evaluated according to user application preference information.

Table 1 shows the user application preference information of a webpage information browsing service, an online video service, and a downloading service to be evaluated.

Table 1

| Service name | Specific application of the service to be evaluated | Application explanation | Quality characteristic preferred by the user |
|---|---|---|---|
| Webpage information browsing | Common webpage browsing | Browsing of a webpage character, a picture, an animation, and etc. | Whether a webpage can be opened or not |
| Online video | Webpage video | Online video watching based on the webpage | Whether a video can be opened or not |
| | | | A time length needed to be waited for opening the video |
| | | | Whether the video is fluent or not |
| | | | Whether the video is clear or not |
| | | | Whether an image and an audio are synchronous |

(continued)

| Service name | Specific application of the service to be evaluated | Application explanation | Quality characteristic preferred by the user |
|---|---|---|---|
| Downloading | Downloading based on the webpage | Downloading application based on WEB or WAP webpage downloading | Whether a download link can be opened or not |
| | | | A time length needed to be waited for opening the download link |
| | | | A download speed level |
| | | | Whether the downloading can be abnormally interrupted or not |

The application preference information of the user aiming at the service to be evaluated includes a specific application of the service to be evaluated, and a quantity characteristic of the specific application of the service to be evaluated preferred by the user.

For example, when creating the CEI group of the webpage information browsing service, it can be known from Table 1 that the quality characteristic preferred by the user corresponding to the webpage information browsing service is: whether the webpage can be opened or not, and the time length for opening the webpage. Therefore, whether the webpage can be opened or not and the time length for opening the webpage are separately mapped to the accessibility, the retainability and the integrity, and the following Sub-QoE indicators may be created:

a webpage initial exhibition success rate satisfaction index is a user QoE indicator aiming at that: after a network address to be visited is input and entered, it can be seen that content is exhibited on a webpage or a webpage browser prompts that the webpage is being downloaded, and this indicator is the accessibility Sub-QoE indicator;
a webpage initial exhibition time delay satisfaction index is the user QoE indicator aiming at that: it can be seen that the content is exhibited on the webpage or the webpage browser prompts that the webpage is being downloaded from the time when the network address to be visited is input and entered, and this indicator is the accessibility Sub-QoE indicator;
a webpage browsing disconnection satisfaction index is the user QoE indicator aiming at that the user cannot complete webpage downloading, and this indicator is the retainability Sub-QoE indicator;
a webpage download speed satisfaction index is the user QoE indicator aiming at a speed for the webpage to completely exhibit webpage content, and this indicator is the integrity Sub-QoE indicator.

Step 402: determining a KQI associated with a created Sub-QoE indicator.

Wherein, there may be one or more KQIs associated with one said Sub-QoE indicator.

Table 2

| Service name | KQI | KQI category |
|---|---|---|
| Webpage information browsing | Webpage header element opening success rate | Accessibility |
| | Webpage header element opening time delay | Accessibility |
| | Webpage download uncompleted rate | Retainability |
| | Webpage download average speed | Integrity |
| | Webpage download speed stability | Integrity |

Correspondingly, the KQI corresponding to the webpage information browsing service is shown in Table 2.

First, the Sub-QoE indicator and the KQI are associated from the accessibility, the retainability and the integrity of the service to be evaluated. Taking the accessibility as an example, the accessibility Sub-QoE indicator (the webpage initial exhibition success rate satisfaction index and the webpage initial exhibition time delay satisfaction index) created in step 301 are associated with the KQI (the webpage header element opening success rate and the webpage header element opening time delay) shown in Table 2;

Because the accessibility Sub-QoE indicator and the KQI are not unique, it also needs to further establish a specific association relation between the Sub-QoE indicator and the KQI in the above association relation according to the quantity characteristic of the webpage information browsing service preferred by the user; and it is determined that the Sub-QoE indicator (the webpage initial exhibition success rate satisfaction index) is only associated with the KQI (the webpage header element opening success rate) according to the quality characteristic (whether the webpage can be opened or not) preferred by the webpage information browsing service; the Sub-QoE indicator (the webpage initial exhibition time delay satisfaction index) is only associated with the KQI (the webpage header element opening time delay).

Correspondingly, the integrity Sub-QoE indicator is associated with the KQI (the Webpage download uncompleted rate), the retainability Sub-QoE indicator is associated with the KQI (the Webpage download average speed).

Step 403: obtaining an actual Sub-QoE indicator value and an actual In-QoE indicator value of the service to be evaluated in the area to be evaluated aiming at a single user through a user survey way.

Step 404: obtaining a statistic of a KQI value of the service to be evaluated.

The KQI value is the KQI value of the service to be evaluated corresponding to the user described in step 403, and is obtained through a KQI statistic system in the related art.

Step 405: constructing a quantitative relation model between the KQI and the CEI aiming at the area to be evaluated by using the Sub-QoE indicator value and the In-QoE indicator value obtained in step 403 and the statistical KQI value in step 404, and then executing step 406.

In this step, the quantitative relation model between the KQI and the CEI, namely the quantitative relation model between the KQI and the Sub-QoE indicator and the quantitative relation model between the Sub-QoE indicator and the In-QoE indicator, may be self-adaptively constructed by adopting the genetic algorithm.

In this embodiment, a corresponding module is constructed according to the actual Sub-QoE indicator value, the actual In-QoE indicator value and the actual KQI value of the webpage information browsing service of a certain city of our country. Because in step 402, a one-to-one association relation between the Sub-QoE indicator (the webpage initial exhibition success rate satisfaction index) and the KQI (the webpage header element opening success rate) has been established, therefore a one-to-one quantitative relation model between the Sub-QoE indicator (the webpage initial exhibition success rate satisfaction index) and the KQI (the webpage header element opening success rate) will be constructed, a corresponding parameter of the genetic algorithm is set as below:

(1) an operator set is {+, -, *, / , ^, exp, log};

(2) a variable symbol set is X={x, y}, wherein, x represents the KQI (the webpage header element opening success rate), y represents the Sub-QoE indicator (the webpage initial exhibition success rate satisfaction index);

(3) a data set is c={-10<c<10}, wherein a maximum power is 6, a population size is 80, and a maximum reproduction number is 10000.

A value range, the maximum power, the population size, and the maximum reproduction number of the data set are determined in accordance with an expected evaluation time, and the value range, the maximum power, the population size and the maximum reproduction number of the data set are positively correlated with the expected evaluation time.

A construction result of the quantitative relation model is shown below:

$$y=(54.9051+\exp(\exp(x))+x-1/(x^{\wedge}x)^{\wedge}(8.7384))/(((((((((((((((((x)^{\wedge}((-0.1652+x)^{*}x))^{\wedge}(1.3771^{*}x))^{\wedge}x)^{\wedge}x)^{\wedge}x)^{\wedge}(1.3771))^{\wedge}(1.3771^{*}x))^{\wedge}x)^{\wedge}(1.3771))^{\wedge}x)^{\wedge}(1.3771))^{\wedge}(1.3771^{*}(((((((((((x)^{\wedge}((-0.1652+x)^{*}x))^{\wedge}(1.3771^{*}x))^{\wedge}x)^{\wedge}x)^{\wedge}(1.3771))^{\wedge}(1.3771^{*}x))^{\wedge}x)^{\wedge}(1.3771))^{\wedge}x)^{\wedge}(1.3771))^{\wedge}x))^{\wedge}(((((((((((x)^{\wedge}((-0.1652+x)^{*}x))^{\wedge}(1.3771^{*}x))^{\wedge}x)^{\wedge}x)^{\wedge}(1.3771))^{\wedge}(1.3771^{*}x))^{\wedge}x)^{\wedge}(1.3771))^{\wedge}x)^{\wedge}(1.3771))^{\wedge}x))^{\wedge}(1.3771))^{\wedge}x$$

Step 406: obtaining a statistic of a full-network dimension KQI value of the area to be evaluated.

The full-network dimension KQI value is obtained by using the KQI statistic system in the related art.

Step 407: calculating full-network dimension user QoE of the area to be evaluated.

The statistical full-network dimension KQI value obtained in step 406 is substituted into the quantitative relation model between the KQI and the Sub-QoE indicator, a Sub-QoE evaluation value is obtained by calculation; the Sub-QoE evaluation value is substituted into the quantitative relation model between the Sub-QoE indicator and the In-QoE indicator, and the In-QoE evaluation value is obtained by calculation. The Sub-QoE evaluation value and the In-QoE evaluation value obtained by calculation is then a full-network dimension user QoE evaluation result.

Table 3

| CEI name | Sub-QoE: webpage initial exhibition success rate satisfaction index | Sub-QoE: webpage initial exhibition time delay satisfaction index | Sub-QoE: webpage browsing disconnection satisfaction index | Sub-QoE: webpage download speed satisfaction index | In-QoE: Integrated QoE |
|---|---|---|---|---|---|
| CEI value | 73.5465 | 72.4485 | 73.4146 | 76.7855 | 74.4961 |

As shown in Table 3, Table 3 is a full-network dimension user QoE evaluation result of the webpage information browsing service of a certain city of our country.

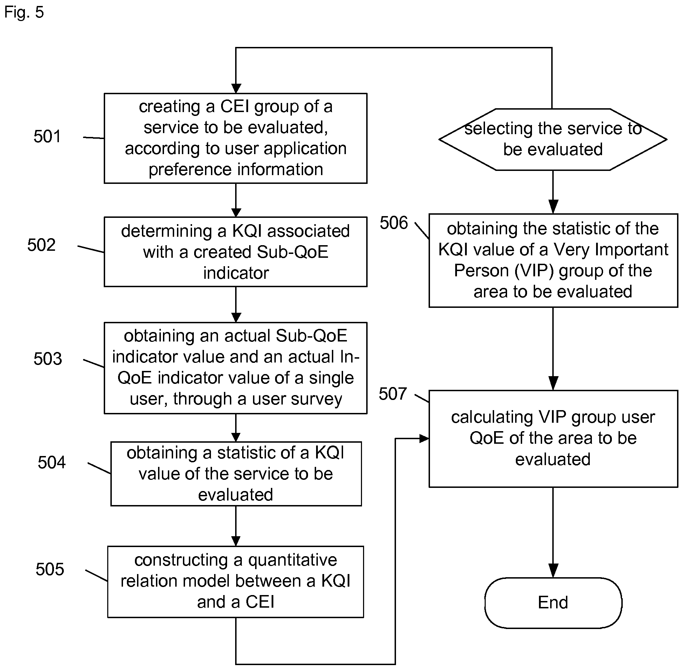

Evaluating QoE of communication service users is also taken as an example below to further explain the method for evaluating the QoE of communication service users recorded by the embodiment of the disclosure in detail. Fig. 5 is a second schematic implementation flowchart of another embodiment of evaluating QoE of communication service users of an embodiment of the disclosure, as shown in Fig. 5, including:

Step 501: creating a CEI group of a service to be evaluated according to user application preference information.
Step 502: determining a KQI associated with a created Sub-QoE indicator.

Wherein, there may be one or more KQIs associated with one said Sub-QoE indicator.

Step 503: obtaining an actual Sub-QoE indicator value and an actual In-QoE indicator value of the service to be evaluated in an area to be evaluated aiming at a single user through a user survey way.

Step 504: obtaining a statistic of a KQI value of the service to be evaluated.

Step 505: constructing a quantitative relation model between a KQI and a CEI aiming at the area to be evaluated by using the actual Sub-QoE indicator value, the actual In-QoE indicator value and the actual KQI value.

In this step, the quantitative relation model between the KQI and the CEI, namely the quantitative relation model between the Sub-QoE indicator and the KQI and the quantitative relation model between the Sub-QoE indicator and the In-QoE indicator, is self-adaptively constructed by adopting the genetic algorithm.

Wherein, the area to be evaluated in this embodiment is the same as that in Embodiment 1, processing in step 501-505 is the same as that in step 401-405 of Embodiment 1.

Step 506: obtaining the statistic of the KQI value of a Very Important Person (VIP) user group of the area to be evaluated.

The VIP user group may be defined according to a scene requirement, and is a multi-dimensional group to be evaluated composed of a certain amount of VIP users.

In this embodiment, the VIP user group is composed of 600 users provided by an operator.

Step 507: calculating VIP group user QoE of the area to be evaluated.

The statistical KQI value is substituted into the quantitative relation model between the Sub-QoE indicator and the KQI, the Sub-QoE evaluation value may then be obtained by calculation; the Sub-QoE evaluation value is substituted into the quantitative relation model between the In-QoE indicator and the Sub-QoE indicator, and the In-QoE value is obtained by calculation. The Sub-QoE evaluation value and the In-QoE evaluation value obtained by calculation are taken as a VIP user group dimension user QoE evaluation result.

As shown in Table 4, Table 4 is a VIP user dimension user QoE evaluation result of the webpage information browsing service of a certain city of our country.

Table 4

| CEI name | Sub-QoE: webpage initial exhibition success rate satisfaction index | Sub-QoE: webpage initial exhibition time delay satisfaction index | Sub-QoE: webpage browsing disconnection satisfaction index | Sub-QoE: webpage download speed satisfaction index | In-QoE: Integrated QoE |
|---|---|---|---|---|---|
| CEI value | 74.3725 | 72.8748 | 73.4037 | 77.1893 | 74.8618 |

All those described above are only preferred embodiments of the disclosure, and are not used to limit the scope of protection of the disclosure.

**INDUSTRIAL APPLICABILITY**

In the embodiment of the disclosure, a Sub-QoE indicator and an In-QoE indicator of a service to be evaluated are created; a quantitative relation model between a KQI and a CEI is constructed; a statistical KQI value in an area to be evaluated aiming at the service to be evaluated is substituted into the quantitative relation model between the KQI and the CEI, and a calculated Sub-QoE value and a calculated In-QoE value are taken as a user QoE evaluation value. Applying a technical scheme of the embodiment of the disclosure solves a problem that a KQI/KPI-QoE quantitative relation model fitted by adopting a constant module equation shall be configured to evaluate user QoE in different areas for different populations, which results in a big error, and the problem that obtaining the user QoE purely by adopting a user survey way cannot perform real-time monitoring and leads to a high cost.

**Claims**

1. A method for evaluating Quality of Experience, QoE, of communication service users, comprising:

    Extracting (101) user application preference information from user behaviour basic data, creating a Customer Experience Indicator, CEI, group of a service to be evaluated according to the user application preference information, wherein the CEI group comprises: a Subordinate Quality of Experience, Sub-QoE, indicator and an Integrated Quality of Experience, In-QoE, indicator;
    Receiving (102) an actual Sub-QoE indicator value, an actual In-QoE indicator value and an actual Key Quantity Indicator, KQI, value of the service to be evaluated in an area to be evaluated aiming at a single user, and constructing a quantitative relation model between a KQI and a CEI by using the Sub-QoE indicator value, the In-QoE indicator value and the KQI value; and
    Substituting (103) the statistical KQI value in the area to be evaluated aiming at the service to be evaluated into the quantitative relation model between the KQI and the CEI, and taking a calculated Sub-QoE value and a calculated In-QoE value as a QoE evaluation result.

2. The method according to claim 1, wherein the constructing the quantitative relation model between the KQI and the CEI by using the actual Sub-QoE indicator value, the actual In-QoE indicator value and the actual KQI value of the service to be evaluated in the area to be evaluated aiming at the single user comprises:

    constructing a quantitative relation model between the KQI and the Sub-QoE indicator, and a quantitative relation model between the Sub-QoE indicator and the In-QoE indicator by using the actual Sub-QoE indicator value, the actual In-QoE indicator value and the actual KQI value of the service to be evaluated in the area to be evaluated aiming at the single user.

3. The method according to claim 2, wherein
the user application preference information comprises: a specific application of the service to be evaluated, and a quality characteristic of the specific application of the service to be evaluated preferred by a user.

4. The method according to claim 3, further comprising: before constructing the quantitative relation model between the KQI and the Sub-QoE indicator,
mapping the quality characteristic separately to accessibility, retainability and integrity of the service to be evaluated according to the quality characteristic of the specific application of the service to be evaluated preferred by the user, and creating an accessibility Sub-QoE indicator, a retainability Sub-QoE indicator and an integrity Sub-QoE indicator reflecting the quality characteristic.

5. The method according to claim 4, further comprising: before constructing the quantitative relation model between the KQI and the Sub-QoE indicator,
associating the created accessibility Sub-QoE indicator, the created retainability Sub-QoE indicator and the created integrity Sub-QoE indicator correspondingly with an accessibility KQI, a retainability KQI and an integrity KQI of the service to be evaluated, to construct the quantitative relation model between the KQI and the Sub-QoE indicator according to an association relation between the Sub-QoE indicator and the KQI.

6. The method according to claim 4 or 5, further comprising: before constructing the quantitative relation model between the Sub-QoE indicator and the In-QoE indicator,
associating the accessibility Sub-QoE indicator, the retainability Sub-QoE indicator and the integrity Sub-QoE indicator created according to the quality characteristic of the specific application of the service to be evaluated preferred by the user with the In-QoE indicator of the service to be evaluated, to construct the quantitative relation model between the Sub-QoE indicator and the In-QoE indicator according to an association relation between the Sub-QoE indicator and the In-QoE indicator.

**7.** A system for evaluating Quality of Experience, QoE, of communication service users, comprising: a basic data extracting and storing module (31), a Customer Experience Indicator, CEI, group creating module (32), a quantitative relation model constructing module (33), and a user QoE evaluating module (34); wherein

the basic data extracting and storing module (31) is configured to extract and store user application preference information from user behaviour basic data; to receive and store an actual Subordinate Quality of Experience, Sub-QoE, indicator value and an actual Integrated Quality of Experience, In-QoE, indicator value and an actual Key Quantity Indicator, KQI, value of a service to be evaluated in an area to be evaluated aiming at a single user; to receive and store a statistical KQI value in the area to be evaluated aiming at the service to be evaluated;

the CEI group creating module (32) is configured to create a CEI group of the service to be evaluated according to the user application preference information received and stored by the basic data extracting and storing module, wherein the CEI group comprises: a Sub-QoE indicator, and an In-QoE indicator;

the quantitative relation model constructing module (33) is configured to constructing a quantitative relation model between a KQI and a CEI by using the actual Sub-QoE indicator value, the actual In-QoE indicator value and the actual KQI value of the service to be evaluated in the area to be evaluated aiming at the single user; and

the user QoE evaluating module (34) is configured to substitute the statistical KQI value in the area to be evaluated aiming at the service to be evaluated, which is received and stored by the basic data extracting and storing module, into the quantitative relation model between the KQI and the CEI created by the quantitative relation model creating module, and to take a calculated Sub-QoE value and a calculated In-QoE value as a QoE evaluation result.

**8.** The system according to claim 7, wherein

the quantitative relation model constructing module (33) is further configured to construct a quantitative relation model between the KQI and the Sub-QoE indicator and a quantitative relation model between the Sub-QoE indicator and the In-QoE indicator by using the actual Sub-QoE indicator value, the actual In-QoE indicator value and the actual KQI value of the service to be evaluated in the area to be evaluated aiming at the single user, which is received and stored by the basic data extracting and storing module (31).

**9.** The system according to claim 8, wherein

the user application preference information comprises: a specific application of the service to be evaluated, and a quality characteristic of the application of the service to be evaluated preferred by a user.

**10.** The system according to claim 9, wherein

the CEI group creating module (32) is further configured to map the quality characteristic separately to accessibility, retainability and integrity of the service to be evaluated, according to the quality characteristic of the specific application of the service to be evaluated preferred by the user, which is extracted and stored by the basic data extracting and storing module (31), and to create an accessibility Sub-QoE indicator, a retainability Sub-QoE indicator and an integrity Sub-QoE indicator reflecting the quality characteristic.

**11.** The system according to claim 10, further comprising:

an associating module (35), configured to associate the accessibility Sub-QoE indicator, the retainability Sub-QoE indicator and the integrity Sub-QoE indicator, which are created by the CEI group creating module (32), correspondingly with an accessibility KQI, a retainability KQI and an integrity KQI; and

the quantitative relation model constructing module (33) is further configured to construct the quantitative relation model between the KQI and the Sub-QoE indicator according to an association relation between the KQI and the Sub-QoE indicator established by the associating module (35).

**12.** The system according to claim 10 or 11, wherein

the associating module (35) is further configured to associate the accessibility Sub-QoE indicator, the retainability Sub-QoE indicator and the integrity Sub-QoE indicator created by the CEI group creating module (32) aiming at the service to be evaluated with the In-QoE indicator of the service to be evaluated; and

the quantitative relation model constructing module (33) is further configured to construct the quantitative relation model between the Sub-QoE indicator and the In-QoE indicator according to an association relation between the Sub-QoE indicator and the In-QoE indicator which is established by the associating module (35).

**Patentansprüche**

1. Verfahren zur Bewertung der Erlebnisqualität, QoE, von Kommunikationsdienstbenutzern, umfassend:

   Extrahieren (101) von Benutzeranwendungspräferenzinformationen aus Benutzerverhaltens-Basisdaten, Erstellen einer Kundenerlebnisindikator, CEI,-Gruppe eines Dienstes, der gemäß den Benutzeranwendungspräferenzinformationen bewertet werden soll, wobei die CEI-Gruppe umfasst: einen Indikator für niedrigere Erlebnisqualität, Sub-QoE, und einen Indikator für integrierte Erlebnisqualität, In-QoE;
   Empfangen (102) eines tatsächlichen Sub-QoE-Indikatorwerts, eines tatsächlichen In-QoE-Indikatorwerts und eines tatsächlichen Schlüsselmengenindikator, KQI,-Werts des zu bewertenden Dienstes in einem zu bewertenden Bereich, die auf einen einzelnen Benutzer abzielen, und Bilden eines quantitativen Beziehungsmodells zwischen dem KQI und einem CEI durch Verwenden des Sub-QoE-Indikatorwerts, des In-QoE-Indikatorwerts und des KQI-Werts; und
   Einsetzen (103) des statistischen KQI-Werts in dem zu bewertenden Bereich, der auf den zu bewerteten Dienst abzielt, in das quantitative Beziehungsmodell zwischen den KQI und den CEI und Nehmen eines berechneten Sub-QoE-Werts und eines berechneten In-QoE-Werts als ein QoE-Bewertungsergebnis.

2. Verfahren nach Anspruch 1, wobei das Bilden des quantitativen Beziehungsmodells zwischen dem KQI und dem CEI durch Verwenden des tatsächlichen Sub-QoE-Indikatorwerts, des tatsächlichen In-QoE-Indikatorwerts und eines tatsächlichen KQI-Werts des zu bewertenden Dienstes in dem zu bewertenden Bereich, die auf den einzelnen Benutzer abzielen, umfasst:

   Bilden eines quantitativen Beziehungsmodells zwischen dem KQI und dem Sub-QoE-Indikator und eines quantitativen Beziehungsmodells zwischen dem Sub-QoE-Indikators und dem In-QoE-Indikator durch Verwenden des tatsächlichen Sub-QoE-Indikatorwerts, des tatsächlichen In-QoE-Indikatorwerts und des tatsächlichen KQI-Werts des zu bewertenden Dienstes in dem zu bewertenden Bereich, die auf den einzelnen Benutzer abzielen.

3. Verfahren nach Anspruch 2, wobei
   die Benutzeranwendungspräferenzinformationen umfassen: eine spezifische Anwendung des zu bewertenden Dienstes und ein Qualitätsmerkmal der spezifischen Anwendung des zu bewertenden Dienstes, das von einem Benutzer bevorzugt wird.

4. Verfahren nach Anspruch 3, ferner umfassend: vor dem Bilden des quantitativen Beziehungsmodells zwischen dem KQI und dem Sub-QoE-Indikator,
   separates Zuordnen des Qualitätsmerkmals zu Barrierefreiheit, Bestandswahrscheinlichkeit und Integrität des zu bewertenden Dienstes gemäß dem vom Benutzer bevorzugten Qualitätsmerkmal der spezifischen Anwendung des zu bewertenden Dienstes und Erstellen eines Barrierefreiheits-Sub-QoE-Indikators, eines Bestandswahrscheinlichkeits-Sub-QoE-Indikators und eines Integritäts-Sub-QoE-Indikators, welche das Qualitätsmerkmal widerspiegeln.

5. Verfahren nach Anspruch 4, ferner umfassend: vor dem Bilden des quantitativen Beziehungsmodells zwischen dem KQI und dem Sub-QoE-Indikator,
   entsprechendes Assoziieren des erstellten Barrierefreiheits-Sub-QoE-Indikators, des erstellten Bestandswahrscheinlichkeits-Sub-QoE-Indikators und des erstellten Integritäts-Sub-QoE-Indikators mit einem Barrierefreiheits-KQI, einem Bestandswahrscheinlichkeits-KQI und einem Integritäts-KQI des zu bewertenden Dienstes, um das quantitative Beziehungsmodell zwischen den KQI und dem Sub-QE-Indikator gemäß einer Assoziationsbeziehung zwischen dem Sub-QoE-Indikator und dem KQI zu bilden.

6. Verfahren nach Anspruch 4 oder 5, ferner umfassend: vor dem Bilden des quantitativen Beziehungsmodells zwischen dem Sub-QoE-Indikator und dem In-QoE-Indikator,
   Assoziieren des Barrierefreiheits-Sub-QoE-Indikators, des Bestandswahrscheinlichkeits-Sub-QoE-Indikators und des Integritäts-Sub-QoE-Indikators, die gemäß dem vom Benutzer bevorzugten Qualitätsmerkmal der spezifischen Anwendung des zu bewertenden Dienstes erstellt werden, mit dem In-QoE-Indikator des zu bewertenden Dienstes, um das quantitative Beziehungsmodell zwischen dem Sub-QoE-Indikator und dem In-QoE-Indikator gemäß einer Assoziationsbeziehung zwischen dem Sub-QoE-Indikator und dem In-QoE-Indikator zu bilden.

7. System zum Bewerten der Erlebnisqualität, QoE, von Kommunikationsdienstbenutzern, umfassend: ein Modul zum Extrahieren und Speichern von Basisdaten (31), ein Modul zum Erstellen von Kundenerlebnisindikator, CEI,-Gruppen (32), ein Modul zum Bilden von quantitativen Beziehungsmodellen (33) und ein Benutzer-QoE-Bewertungsmodul

**EP 2 919 416 B1**

(34); wobei:

das Modul zum Extrahieren und Speichern von Basisdaten (31) so konfiguriert ist, dass es Benutzeranwendungspräferenzinformationen aus Benutzerverhaltens-Basisdaten extrahiert und speichert; einen tatsächlichen Indikatorwert für niedrigere Erlebnisqualität, Sub-QoE, einen tatsächlichen Indikatorwert für integrierte Erlebnisqualität, In-QoE, und einen tatsächlichen Schlüsselmengenindikator, KQI,-Wert des zu bewertenden Dienstes in einem zu bewertenden Bereich, die auf einen einzelnen Benutzer abzielen, empfängt und speichert; und einen statistischen KQI-Wert in dem zu bewertenden Bereich, der auf den zu bewertenden Dienst abzielt, empfängt und speichert;

das CEI-Gruppenerstellungsmodul (32) so konfiguriert ist, dass es eine CEI-Gruppe des zu bewertenden Dienstes gemäß den Benutzeranwendungspräferenzinformationen erstellt, die durch das Modul zum Extrahieren und Speichern von Basisdaten empfangen und gespeichert werden, wobei die CEI-Gruppe umfasst: einen Sub-QoE-Indikator und einen In-QoE-Indikator;

das Modul zum Bilden von quantitativen Beziehungsmodellen (33) so konfiguriert ist, dass es ein quantitatives Beziehungsmodell zwischen einem KQI und einem CEI durch Verwenden des tatsächlichen Sub-QoE-Indikatorwerts, des tatsächlichen In-QoE-Indikatorwerts und des tatsächlichen KQI-Werts des zu bewertenden Dienstes in dem zu bewertenden Bereich bildet, die auf den einzelnen Benutzer abzielen; und

das Benutzer-QoE-Bewertungsmodul (34) so konfiguriert ist, das es den statistischen KQI-Wert in dem zu bewertenden Bereich, der auf den zu bewerten Dienst abzielt und der durch das Modul zum Extrahieren und Speichern von Basisdaten empfangen und gespeichert wird, in das durch das Modell zum Erstellen von quantitativen Beziehungsmodellen erstellte quantitative Beziehungsmodell zwischen dem KQI und dem CEI einsetzt und einen berechneten Sub-QoE-Wert und einen berechneten In-QoE-Wert als ein QoE-Bewertungsergebnis nimmt.

8. System nach Anspruch 7, wobei:

das Modell zum Erstellen von quantitativen Beziehungsmodellen (33) ferner so konfiguriert ist, dass es ein quantitatives Beziehungsmodell zwischen dem KQI und dem Sub-QoE-Indikator und ein quantitatives Beziehungsmodells zwischen dem Sub-QoE-Indikator und dem In-QoE-Indikator durch Verwenden des tatsächlichen Sub-QoE-Indikatorwerts, des tatsächlichen In-QoE-Indikatorwerts und des tatsächlichen KQI-Werts des zu bewertenden Dienstes in dem zu bewertenden Bereich bildet, die auf den einzelnen Benutzer abzielen und die durch das Modul zum Extrahieren und Speichern von Basisdaten (31) empfangen und gespeichert werden.

9. System nach Anspruch 8, wobei:

die Benutzeranwendungspräferenzinformationen umfassen: eine spezifische Anwendung des zu bewertenden Dienstes und ein Qualitätsmerkmal der Anwendung des zu bewertenden Dienstes, das von einem Benutzer bevorzugt wird.

10. System nach Anspruch 9, wobei:

das CEI-Gruppenerstellungsmodul (32) ferner so konfiguriert ist, dass es das Qualitätsmerkmal separat zu Barrierefreiheit, Bestandswahrscheinlichkeit und Integrität des zu bewertenden Dienstes gemäß dem vom Benutzer bevorzugten Qualitätsmerkmal der spezifischen Anwendung des zu bewertenden Dienstes zuordnet, das durch das Modul zum Extrahieren und Speichern von Basisdaten (31) extrahiert und gespeichert wird, und einen Barrierefreiheits-Sub-QoE-Indikator, einen Bestandswahrscheinlichkeits-Sub-QoE-Indikator und einen Integritäts-Sub-QoE-Indikator erstellt, welche das Qualitätsmerkmal widerspiegeln.

11. System nach Anspruch 10, ferner umfassend:

ein Assoziationsmodul (35), das so konfiguriert ist, dass es den Barrierefreiheits-Sub-QoE-Indikator, den Bestandswahrscheinlichkeits-Sub-QoE-Indikator und den Integritäts-Sub-QoE-Indikator, die durch das CEI-Gruppenerstellungsmodul (32) erstellt werden, entsprechend mit einem Barrierefreiheits-KQI, einem Bestandswahrscheinlichkeits-KQI und einem Integritäts-KQI assoziiert;

das Modul zum Bilden von quantitativen Beziehungsmodellen (33) ferner so konfiguriert ist, dass es das quantitative Beziehungsmodul zwischen dem KQI und dem Sub-QoE-Indikator gemäß einer Assoziationsbeziehung zwischen dem KQI und dem Sub-QoE-Indikator bildet, die durch das Assoziationsmodul (35) hergestellt wird.

**12.** System nach Anspruch 10 oder 11, wobei
dass Assoziationsmodul (35) ferner so konfiguriert ist, dass es den Barrierefreiheits-Sub-QoE-Indikator, den Bestandswahrscheinlichkeits-Sub-QoE-Indikator und den Integritäts-Sub-QoE-Indikator, die durch das CEI-Gruppenerstellungsmodul (32) erstellt werden und auf den zu bewertenden Dienst abzielen, mit dem In-QoE-Indikator des zu bewertenden Dienstes assoziiert; und
das Modul zum Bilden von quantitativen Beziehungsmodellen (33) ferner so konfiguriert ist, dass es das quantitative Beziehungsmodul zwischen dem Sub-QoE-Indikator und dem In-QoE-Indikator gemäß einer Assoziationsbeziehung zwischen dem Sub-QoE-Indikator und dem In-QoE-Indikator bildet, die durch das Assoziationsmodul (35) hergestellt wird.

**Revendications**

**1.** Procédé d'évaluation de qualité d'expérience, QoE, d'utilisateurs de services de communication, comprenant les étapes ci-dessous consistant à :

extraire (101) des informations sur les préférences des applications d'utilisateurs de données de base de comportements d'utilisateurs, créer un groupe d'indicateurs d'expérience de clients, CEI, d'un service devant être évalué selon les informations sur les préférences des applications d'utilisateurs, dans lequel le groupe d'indicateurs CEI comprend : un indicateur de qualité d'expérience subordonnée, appelé « indicateur de qualité QoE subordonnée », et un indicateur de qualité d'expérience intégrée, appelé « indicateur de qualité QoE intégrée » ;
recevoir (102) une valeur d'indicateur de qualité QoE subordonnée en cours, une valeur d'indicateur de qualité QoE intégrée en cours, et une valeur d'indicateur de quantité clé, KQI, en cours, du service devant être évalué dans une zone devant être évaluée ciblant un utilisateur unique, et construire un modèle de relation quantitative entre un indicateur KQI et un indicateur CEI en faisant appel à la valeur d'indicateur de qualité QoE subordonnée, à la valeur d'indicateur de qualité QoE intégrée et à la valeur d'indicateur KQI ; et
remplacer (103) la valeur d'indicateur KQI statistique dans la zone devant être évaluée ciblant le service devant être évalué dans le modèle de relation quantitative entre l'indicateur KQI et l'indicateur CEI, et prendre une valeur de qualité QoE subordonnée calculée et une valeur de qualité QoE intégrée calculée en tant que résultat d'évaluation de qualité QoE.

**2.** Procédé selon la revendication 1, dans lequel l'étape de construction du modèle de relation quantitative entre l'indicateur KQI et l'indicateur CEI en faisant appel à la valeur d'indicateur de qualité QoE subordonnée en cours, à la valeur d'indicateur de qualité QoE intégrée en cours et à la valeur d'indicateur KQI en cours du service devant être évalué dans la zone devant être évaluée ciblant l'utilisateur unique comprend l'étape ci-dessous consistant à :

construire un modèle de relation quantitative entre l'indicateur KQI et l'indicateur de qualité QoE subordonnée, et un modèle de relation quantitative entre l'indicateur de qualité QoE subordonnée et l'indicateur de qualité QoE intégrée en utilisant la valeur d'indicateur de qualité QoE subordonnée en cours, la valeur d'indicateur de qualité QoE intégrée en cours et la valeur d'indicateur KQI en cours du service devant être évalué dans la zone devant être évaluée ciblant l'utilisateur unique.

**3.** Procédé selon la revendication 2, dans lequel
les informations sur les préférences des applications d'utilisateurs comportent : une application spécifique du service devant être évalué et une caractéristique de qualité de l'application spécifique du service devant être évalué préférée par un utilisateur.

**4.** Procédé selon la revendication 3, comprenant en outre les étapes ci-dessous consistant à : avant de construire le modèle de relation quantitative entre l'indicateur KQI et l'indicateur de qualité QoE subordonnée :

mettre en correspondance la caractéristique de qualité, séparément, avec une accessibilité, une aptitude à la rétention et une intégrité du service devant être évalué selon la caractéristique de qualité de l'application spécifique du service devant être évalué préférée par l'utilisateur, et créer un indicateur de qualité QoE subordonnée d'accessibilité, un indicateur de qualité QoE subordonnée d'aptitude à la rétention et un indicateur de qualité QoE subordonnée d'intégrité qui reflètent la caractéristique de qualité.

**5.** Procédé selon la revendication 4, comprenant en outre l'étape ci-dessous consistant à : avant de construire le modèle de relation quantitative entre l'indicateur KQI et l'indicateur de qualité QoE subordonnée :

associer l'indicateur de qualité QoE subordonnée d'accessibilité créé, l'indicateur de qualité QoE subordonnée d'aptitude à la rétention créé et l'indicateur de qualité QoE subordonnée d'intégrité créé, de manière correspondante, à un indicateur KQI d'accessibilité, à un indicateur KQI d'aptitude à la rétention et à un indicateur KQI d'intégrité du service devant être évalué, en vue de construire le modèle de relation quantitative entre l'indicateur KQI et l'indicateur de qualité QoE subordonnée, selon une relation d'association entre l'indicateur de qualité QoE subordonnée et l'indicateur KQI.

6. Procédé selon la revendication 4 ou 5, comprenant en outre les étapes ci-dessous consistant à, avant de construire le modèle de relation quantitative entre l'indicateur de qualité QoE subordonnée et l'indicateur de qualité QoE intégrée :

associer l'indicateur de qualité QoE subordonnée d'accessibilité, l'indicateur de qualité QoE subordonnée d'aptitude à la rétention et l'indicateur de qualité QoE subordonnée d'intégrité créés selon la caractéristique de qualité de l'application spécifique du service devant être évalué ayant la préférence de l'utilisateur, à l'indicateur de qualité QoE intégrée du service devant être évalué, en vue de construire le modèle de relation quantitative entre l'indicateur de qualité QoE subordonnée et l'indicateur de qualité QoE intégrée, selon une relation d'association entre l'indicateur de qualité QoE subordonnée et l'indicateur de qualité QoE intégrée.

7. Système destiné à évaluer une qualité d'expérience, QoE, d'utilisateurs de services de communication, comprenant : un module d'extraction et de stockage de données de base (31), un module de création de groupe d'indicateurs d'expérience de clients, CEI, (32), un module de construction de modèle de relation quantitative (33) et un module d'évaluation de qualité QoE d'utilisateur (34) ; dans lequel

le module d'extraction et de stockage de données de base (31) est configuré de manière à extraire, et à stocker, des informations sur les préférences des applications d'utilisateurs, de données de base de comportements d'utilisateurs ; à recevoir et à stocker une valeur d'indicateur de qualité d'expérience subordonnée en cours, appelée « valeur d'indicateur de qualité QoE subordonnée », une valeur d'indicateur de qualité d'expérience intégrée en cours, appelée « valeur d'indicateur de qualité QoE intégrée », et une valeur d'indicateur de quantité clé, KQI, en cours, d'un service devant être évalué dans une zone devant être évaluée ciblant un utilisateur unique ; à recevoir et à stocker une valeur d'indicateur KQI statistique dans la zone devant être évaluée ciblant le service devant être évalué ;

le module de création de groupe d'indicateurs CEI (32) est configuré de manière à créer un groupe d'indicateurs CEI du service devant être évalué selon les informations sur les préférences des applications d'utilisateurs reçues et stockées par le module d'extraction et de stockage de données de base, dans lequel le groupe d'indicateurs CEI comprend : un indicateur de qualité QoE subordonnée et un indicateur de qualité QoE intégrée ;

le module de construction de modèle de relation quantitative (33) est configuré de manière à construire un modèle de relation quantitative entre un indicateur KQI et un indicateur CEI, en utilisant la valeur d'indicateur de qualité QoE subordonnée en cours, la valeur d'indicateur de qualité QoE intégrée en cours et la valeur d'indicateur KQI en cours du service devant être évalué dans la zone devant être évaluée ciblant l'utilisateur unique ; et

le module d'évaluation de qualité QoE d'utilisateur (34) est configuré de manière à remplacer la valeur d'indicateur KQI statistique dans la zone devant être évaluée ciblant le service devant être évalué, laquelle est reçue et stockée par le module d'extraction et de stockage de données de base, dans le modèle de relation quantitative, entre l'indicateur KQI et l'indicateur CEI, créé par le module de création de modèle de relation quantitative, et à prendre une valeur de qualité QoE subordonnée calculée et une valeur de qualité QoE intégrée calculée en tant que résultat d'évaluation de qualité QoE.

8. Système selon revendication 7, dans lequel
le module de construction de modèle de relation quantitative (33) est en outre configuré de manière à construire un modèle de relation quantitative entre l'indicateur KQI et l'indicateur de qualité QoE subordonnée, et un modèle de relation quantitative entre l'indicateur de qualité QoE subordonnée et l'indicateur de qualité QoE intégrée en utilisant la valeur d'indicateur de qualité QoE subordonnée en cours, la valeur d'indicateur de qualité QoE intégrée en cours, et la valeur d'indicateur KQI en cours du service devant être évalué dans la zone devant être évaluée ciblant l'utilisateur unique, lesquelles sont reçues et stockées par le module d'extraction et de stockage de données de base (31).

9. Système selon la revendication 8, dans lequel
les informations sur les préférences des applications d'utilisateurs comportent : une application spécifique du service devant être évalué, et une caractéristique de qualité de l'application du service devant être évalué ayant la préférence d'un utilisateur.

10. Système selon revendication 9, dans lequel
le module de création de groupe d'indicateurs CEI (32) est en outre configuré de manière à mettre en correspondance la caractéristique de qualité, séparément, avec une accessibilité, une aptitude à la rétention et une intégrité du service devant être évalué, selon la caractéristique de qualité de l'application spécifique du service devant être évalué, ayant la préférence de l'utilisateur, laquelle est extraite et stockée par le module d'extraction et de stockage de données de base (31), et à créer un indicateur de qualité QoE subordonnée d'accessibilité, un indicateur de qualité QoE subordonnée d'aptitude à la rétention et un indicateur de qualité QoE subordonnée d'intégrité qui reflètent la caractéristique de qualité.

11. Système selon la revendication 10, comprenant en outre :

un module d'association (35), configuré de manière à associer l'indicateur de qualité QoE subordonnée d'accessibilité, l'indicateur de qualité QoE subordonnée d'aptitude à la rétention et l'indicateur de qualité QoE subordonnée d'intégrité, lesquels sont créés par le module de création de groupe d'indicateurs CEI (32), de manière correspondante, à un indicateur KQI d'accessibilité, à un indicateur KQI d'aptitude à la rétention et à un indicateur KQI d'intégrité ; et
le module de construction de modèle de relation quantitative (33) est en outre configuré de manière à construire le modèle de relation quantitative entre l'indicateur KQI et l'indicateur de qualité QoE subordonnée selon une relation d'association entre l'indicateur KQI et l'indicateur de qualité QoE subordonnée établis par le module d'association (35).

12. Système selon la revendication 10 ou 11, dans lequel
le module d'association (35) est en outre configuré de manière à associer l'indicateur de qualité QoE subordonnée d'accessibilité, l'indicateur de qualité QoE subordonnée d'aptitude à la rétention et l'indicateur de qualité QoE subordonnée d'intégrité créés par le module de création de groupe d'indicateurs CEI (32) ciblant le service devant être évalué, à l'indicateur de qualité QoE intégrée du service devant être évalué ; et
le module de construction de modèle de relation quantitative (33) est en outre configuré de manière à construire le modèle de relation quantitative entre l'indicateur de qualité QoE subordonnée et l'indicateur de qualité QoE intégrée, selon une relation d'association entre l'indicateur de qualité QoE subordonnée et l'indicateur de qualité QoE intégrée, laquelle est établie par le module d'association (35).

Fig. 1

```
┌─────────────────────────────────────────────────────────┐
│  extracting user application preference information from  │      101
│  behaviour basic data, creating a CEI group of a service  │
│  to be evaluated according to the user application        │
│  preference information, wherein the CEI group includes:  │
│  a Sub-QoE indicator and an In-QoE indicator              │
└─────────────────────────────────────────────────────────┘
                            │
                            ▼
┌─────────────────────────────────────────────────────────┐
│  receiving an actual Sub-QoE indicator value, an actual   │      102
│  In-QoE indicator value, and an actual KQI value of the   │
│  service to be evaluated in an area to be evaluated        │
│  aiming at a single user, and constructing a quantitative  │
│  relation model between a KQI and a CEI by using the       │
│  Sub-QoE indicator value, the In-QoE indicator value,     │
│  and the KQI value                                        │
└─────────────────────────────────────────────────────────┘
                            │
                            ▼
┌─────────────────────────────────────────────────────────┐
│  substituting the statistical KQI value in the area to be  │      103
│  evaluated aiming at the service to be evaluated into the  │
│  quantitative relation model between the KQI and the CEI,  │
│  and taking the output Sub-QoE value and the output In-   │
│  QoE value as a QoE evaluation result                      │
└─────────────────────────────────────────────────────────┘
```

Fig. 2

```
                              ┌──────────────┐
                              │    Start     │
                              └──────┬───────┘
                                     │
                          ┌──────────▼──────────┐
                          │ defining a solution │        201
                          │ space, and initiating a │
                          │      population      │
                          └──────────┬──────────┘
                                     │
                          ┌──────────▼──────────┐
                          │ evaluating adaptability │      202
                          │  of an individual of the │
                          │      population      │
                          └──────────┬──────────┘
                                     │
                          ┌──────────▼──────────┐
   ┌──────────────────┐   │ selecting a set amount │     203
   │   performing hybridization │   │  of individuals having │
206│   operation on the selected │   │ high adaptability from │
   │      individual      │   │  the current population │
   └──────────┬───────┘   └──────────┬──────────┘
              │                      │
   ┌──────────▼───────┐  No ┌────────▼─────────┐       204
   │   performing the    │◄────┤ Whether a terminal condition │
207│   hybridization operation │     │   is reached or not │
   │   on the individual in the │     └────────┬─────────┘
   │      population      │              │ Yes
   └──────────┬───────┘   ┌──────────▼──────────┐       205
              │           │  outputting an optimal │
   ┌──────────▼───────┐   │      individual      │
208│   updating the population │   └──────────┬──────────┘
   └──────────────────┘              │
                              ┌──────▼───────┐
                              │     End      │
                              └──────────────┘
```

Fig. 3

```
                  ┌──────────────────────┐
                  │      Basic data      │
                  │   extracting and     │
            31    │   storing module     │
                  └──────────┬───────────┘
      ┌──────────────┬───────┼───────┬──────────────┐
┌─────▼─────┐  ┌─────▼─────┐ ┌──────▼──────┐  ┌─────▼─────┐
│ CEI group │  │           │ │ Quantitative relation │  │  User QoE  │
│  creating │  │ Associating │ │ model constructing │  │ evaluating │
│  module   │  │  module   │ │    module    │  │  module   │
└───────────┘  └───────────┘ └─────────────┘  └───────────┘
     32             35              33               34
```

Fig. 4

401 — creating a CEI group of a service to be evaluated, according to user application preference information

selecting the service to be evaluated

402 — determining a KQI associated with a created Sub-QoE indicator

406 — obtaining a statistic of a full-network dimension KQI value of the area to be evaluated

403 — obtaining an actual Sub-QoE indicator value and an actual In-QoE indicator value of a single user, through a user survey

404 — obtaining a statistic of a KQI value of the service to be evaluated

407 — calculating full-network dimension user QoE of the area to be evaluated

405 — constructing a quantitative relation model between the KQI and the CEI

End

Fig. 5

501 — creating a CEI group of a service to be evaluated, according to user application preference information

selecting the service to be evaluated

502 — determining a KQI associated with a created Sub-QoE indicator

506 — obtaining the statistic of the KQI value of a Very Important Person (VIP) group of the area to be evaluated

503 — obtaining an actual Sub-QoE indicator value and an actual In-QoE indicator value of a single user, through a user survey

504 — obtaining a statistic of a KQI value of the service to be evaluated

507 — calculating VIP group user QoE of the area to be evaluated

505 — constructing a quantitative relation model between a KQI and a CEI

End

**EP 2 919 416 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012051852 A1